# EUROPÄISCHE PATENTSCHRIFT

(11) **EP 0 442 505 B1**
(45) Veröffentlichungstag und Bekanntmachung des Hinweises auf die Patenterteilung: **11.01.1995**
(21) Anmeldenummer: 91102113.7
(22) Anmeldetag: 14.02.1991
(51) Int. Cl.: H02G 3/06

(54) **Rohranschlussteil, Rohrverbindungsteil und zugehörige Mutter**
Pipe junction fitting, pipe connection fitting with nut
Dispositif de jonction de tuyaux, dispositif de connexion de tuyaux et écrou accessoire

(30) Priorität: 14.02.1990 DE 4004564
(43) Veröffentlichungstag der Anmeldung: 21.08.1991
(73) Patentinhaber: FRÄNKISCHE ROHRWERKE, GEBR. KIRCHNER GmbH & Co., D-97486 Königsberg (DE)
(72) Erfinder: Braun, Franz-Josef, W-8729 Königsberg/Bayern (DE); Frey, Jürgen, W-8478 Teunz (DE)
(74) Vertreter: Schwabe - Sandmair - Marx

(56) Entgegenhaltungen:
- EP-A- 0 268 869
- DE-U- 8 805 492
- US-A- 3 711 632
- US-A- 3 711 633
- US-A- 4 829 145
- US-A- 4 888 453

## Beschreibung

Die Erfindung betrifft ein Rohranschlußteil aus Kunststoff für Wellrohre gemäß dem Oberbegriff des Patentanspruchs 1, ein Rohrverbindungsteil gemäß dem Oberbegriff des Patentanspruch 17 sowie eine teilbare Mutter aus Kunststoff für Rohranschlußteile gemäß dem Oberbegriff des Patentanspruchs 18.

Ein derartiges Rohranschlußteil ist beispielsweise aus DE-U-8 805 492 bekannt.

Das bekannte Anschlußteil ist für Wellrohre vorgesehen und so ausgebildet, daß das im wesentlichen zylindrische Gehäuse Wellrohre durch Einschieben entlang der Längsachse aufnehmen kann. Mit dem Gehäuse schwenkbar verbunden ist ein bogenförmiges Verriegelungselement vorgesehen. Dieses weist auf der Innenfläche zwei vorspringende Paare von Rippen auf, die beim Schließen des Verriegelungselements durch eine im Gehäuse vorgesehene Öffnung durchtreten und in die Rippen eines Wellrohres eingreifen. Dadurch wird dieses arretiert.

An einem Ende des Gehäuses des Rohranschlußteils ist ein Stutzenteil samt einem Anschlagteil und einem Gewinde vorgesehen, das die Verbindung mit anderen Gegenständen ermöglicht.

Nachteilig ist bei obigem Rohranschlußteil jedoch, daß dieses in geschlossen zylindrischer Form ausgebildet ist.

Sofern durch das Wellrohr bereits Kabel verlaufen und diese mit dem Ende des Wellrohres nicht gemeinsam enden, ist es schwierig oder unmöglich, eines der oben beschriebenen Anschlußteile anzubringen.

Aus US-A-4 829 145 ist ein Anschlußteil für Wellrohre bekannt, das aus zwei über ein Scharnier verbundene Halbteile verfügt, die im Innenraum ein Wellrohr aufnehmen können. Die beiden Halbteile können durch Verrastung geschlossen werden. Auf der Innenseite der Halbteile sind Rippen vorgesehen, die beim Schließen in die Rippen des Wellrohres eingreifen.

Aus US-A-4 829 145 ist ein Rohrverbindungsteil bekannt. Bei diesem werden in ein Halbteil die beiden zu verbindenden Wellrohrenden eingelegt und dann das andere Halbteil geschlossen und verrastet.

Auch hier ist ein Rohranschlußteil als Wellrohrendanschlußteil ausgestaltet und so ausgebildet, daß der zur Aufnahme des Wellrohrs angepaßte Abschnitt auf dieses aufgeschnappt wird, während sich ein weiterer Abschnitt des bekannten Rohranschlußteils über das Ende des Wellrohrs hinaus erstreckt. Das Wellrohr ist mit einem sich über die gesamte Längserstreckung des Rohrs erstreckenden seitlichen Schlitz versehen, der aufgebogen werden kann, um ein oder mehrere elektrische Kabel in dem Wellrohr aufzunehmen. Derartige Wellrohre sind besonders nützlich für das Verlegen von Kabelsträngen und Kabelbäumen, insbesondere in der Automobilindustrie, aber auch bei sonstigen technischen Anlagen, bei denen elektrische Leitungen, Hydraulikleitungen, pneumatische Leitungen und dergleichen verlegt werden. Das Wellrohr schützt diese Leitungen und gestattet es, sowohl Kabel-als auch Leitungsbäume in vormontiertem Zustand aufzunehmen, wobei durch den seitlichen Schlitz jederzeit Abzweigungsmöglichkeiten geschaffen werden können, und gestattet darüberhinaus das nachträgliche Verlegen zusätzlicher Leitungen, die durch den Seitenschlitz in das Welllrohr geschoben werden.

Allerdings sind die Leitungen innerhalb des längsgeschlitzten Wellrohrs grundsätzlich freibeweglich angeordnet, daher weist das bekannte Rohranschlußteil an seinem freien, über das Ende des Wellrohrs vorstehenden Ende, nach innen ragende Teile auf, die in verrastetem Zustand des Rohranschlußteils die innen entlang des Wellrohrs verlaufenden Leitungen haltern. Nachteilig bei derartigen Wellrohren ist es, daß der Seitenschlitz des üblicherweise aus Kunststoff bestehenden Wellrohres verhältnismäßig scharfkantig ist und daher beim öffnen zum Einführen von Kabeln eine Verletzungsgefahr besteht. Der scharfkantige Seitenschlitz kann sich insbesondere bei gekrümmter Verlegung des Wellrohrs öffnen, wodurch die Gefahr besteht, daß ein Kabel zumindest teilweise aus dem Wellrohr austritt und an den Kanten des Seitenschlitzes durchscheuert. Darüberhinaus führt der offene Schlitz des Wellrohrs dazu, daß Kondenswasser, sonstige Flüssigkeiten, Staub und Verschmutzungen in das innere des Wellrohres eindringen können und dort zu einer Korrosion der Leitungen führen; hierbei ist zu berücksichtigen, daß sich nur im Endabschnitt des Wellrohrs ein Rohranschlußteil befindet, welches das Wellrohr umschließt.

Weiterhin wurde für derartige mit einem Längsschlitz versehene Wellrohre in der US-PS 3 711 633 ein Rohranschlußteil in T-Anordnung (T-Stück) vorgeschlagen, um von einem durchgehenden Wellrohr seitlich ein weiteres Wellrohr abzweigen zu lassen. Weiterhin wird in dieser Druckschrift ein Rohranschlußteil vorgeschlagen, welches irgendwo im Verlauf eines durchgehenden Wellrohrs angebracht wird und in der Mitte eine Öffnung aufweist, um durch diese beispielsweise eine einzelne Leitung seitlich aus dem durchgehenden Rohr austreten zu lassen.

Die Anmelderin der vorliegenden Anmeldung hat bereits in der DE-PS 36 40 226 eine verbesserte Kunststoff-Schutzrohranordnung vorgeschlagen, die aus einem inneren längsgeschlitzten Kunststoffrohr zur Aufnahme der Leitungen und einem äußeren längsgeschlitzten Kunststoffrohr besteht, das dazu eingerichtet ist, das innere Kunststoffrohr von außen her zu umgreifen und dabei dessen Längsschlitz nach außen hin abzudecken. Hierzu sind beide Kunststoffrohre als ringgewellte Rohre ausgebildet, der Längsschlitz im inneren Kunststoffrohr ist kleiner als die Hälfte dessen Durchmessers, und der Längsschlitz im äußeren Kunststoffrohr ist so bemessen, daß das äußere Kunststoffrohr von außen her auf das innere Kunststoffrohr aufklemmbar ist.

Hierdurch ergibt sich ein wesentlich besserer Schutz für im innern dieser Schutzrohranordnung verlegten Leitungen, da kein nach außen offener Schlitz mehr vorhanden ist. Weiterhin wurde in der letztgenannten Druckschrift auch ein Abzweigungsstück vorgeschlagen mit einem durchgehenden, gewellten, längsgeteilten Rohrstutzen, der auf das Innenrohr und/oder das Außenrohr paßt und aufsetzbar ist, und mit einem längsgeteilten Abzweigungsstutzen, dessen beide Hälfte jeweils an einem Teil des Rohrstutzen angeformt sind, wobei die so ausgebildeten beiden Halbschalen um das Innen- und/oder Außenrohr herumlegbar und/oder aneinander befestigbar sind.

Auf einem anderen technischen Gebiet ist, wie in dem DE-GM 73 15 704 beschrieben ist, ein Gewindestopfen aus Kunststoff vorgeschlagen worden, der mit einem hohlzylindrischen Körper mit Innengewinde versehen ist, welcher aus zwei Hohlzylinderhälften zusammengesetzt ist. Die Hohlzylinderhälften sind an einer Stirnseite in einer Halbierungsebene durch einen oder mehrere dünne Stege verbunden. Durch diese Maßnahmen soll der bislang beim Spritzformen von Kunststoffgewindestopfen mit Innengewinde erforderlich gewesene Herstellungsaufwand verringert werden, da die Entfernung des Kerns einer Spritzform nur durch Herausdrehen aus dem Gewindestopfen möglich ist.

Auf dem Gebiet metallischer Schrauben wurde gemäß der DE-OS 20 37 251 eine Schraube mit einem dünnwandigen, hohlzylindrischen Schaft vorgeschlagen, der mit Gewinde versehen ist. Der Schaft besteht aus zwei miteinander verbundenen Blechteilen. Zur Herstellung wird ein Blechstreifen ausgestanzt, und durch ein Prägewerkzeug werden an den Enden des Blechstreifens halbzylindrische Teile mit Gewinde ausgeformt. Das Zwischenglied zwischen den halbzylindrischen Teilen wird über einen Dorn gebogen, so daß die halbzylindrischen Teile zur Anlage aneinander kommen. Derartige Maßnahmen sind naturgemäß bei Kunststoffteilen nicht durchführbar.

Die Verlegung von Kabeln und/oder Leitungen in Wellrohren, insbesondere wenn eine Schutzrohranordnung eingesetzt wird, wie sie in der DE-PS 36 40 226 beschrieben wurde, bietet zahlreiche Vorteile. Allerdings wurde bislang nicht erkannt, daß an den Enden derartiger Rohrteile dort Probleme auftreten können, wo die Kabel oder Leitungen üblicherweise durch Löcher in die zu versorgenden Geräte oder Anlagen geführt werden müssen. Derartige Löcher sind an Spritzwänden in Kraftfahrzeugen, im Außengehäuse zu versorgender Einrichtungen, an Schaltschränken und dergleichen vorhanden. Nun besteht der große Vorteil der genannten Wellrohre gerade darin, daß diese auch über bereits verlegte Leitungen, Kabelstränge und dergleichen aufgeschoben werden können. Dieser Vorteil wird nun dort zunichte gemacht, wo an einem Loch beispielsweise in einer Spritzwand eine übliche Durchführung eingesetzt wird.

Der Erfindung liegt daher die Aufgabe zugrunde, ein Rohranschlußteil zur Verfügung zu stellen, welches die vollständige Nutzung der mit geschlitzten Wellrohren erzielbaren Vorteile gestattet.

Der Erfindung liegt die Erkenntnis zugrunde, das bekannte Rohranschlußteil derart weiterzuentwickeln, daß dieses auf ein Wellrohr aufschnappbar oder aufrastbar ist. Dabei ist das Rohranschlußteil derart ausgebildet, daß die zwei aufklappbaren Teile die Halbteile des Rohranschlußteils bilden und diese über ein Filmscharnier verbunden sind. Das Rohranschlußteil ist insgesamt einstückig ausgebildet. Eine weitere Erkenntis der vorliegenden Erfindung liegt in der Bereitstellung einer an sich aus anderem Zusammenhang bekannten teilbaren Mutter, die auf den erfindungsgemäßen Stutzen bei durchgezogenen Leitungen, Kabeln und einem diese umschließenden Wellrohr aufgeschoben werden kann, und in der für diese Zwecke besonders angepaßten Ausführung der Mutter. Darüber hinaus führt die der Erfindung zugrundeliegende Erkenntnis zu der Bereitstellung eines Rohrverbindungsteils, welches die Flexibilität eines erfindungsgemäßen Systems aus Wellrohren, Rohranschlußteilen und gegebenenfalls Muttern noch weiter erhöht.

Die Aufgabe wird durch die mit den in den Patentansprüchen 1, 17 und 18 angegebenen Merkmalen definierten Gegenstände gelöst.

Vorteilhafte Ausführungsformen werden durch die Unteransprüche definiert.

Um das Rohranschlußteil mit dem Wellrohr zu verbinden, werden die beiden über ein Filmscharnier verbundenen Halbteile um das Wellrohr gelegt und miteinander verrastet. Die einteilige Ausbildung des Rohranschlußteils stellt hierbei eine einfache Handhabung sicher, verhindert den Verlust von Zubehörteilen und verbilligt die Herstellung.

Der mit einem Außengewinde versehene Stutzen des Rohranschlußteils wird in ein vorgesehenes Loch in einer Wand eingeschoben. Darüber hinaus läßt sich auf dem mit Außengewinde versehenen Stutzen ein entsprechend ausgebildeter, mit einem Innengewinde versehener Stutzen aufschrauben, der zu einem zweiten Rohranschlußteil gehört, welches wiederum in entsprechender Weise zu einem weiteren Wellrohr überleitet.

Auf der anderen Seite der Wand kann dann einfach eine Mutter oder besonders bevorzugt eine teilbare Mutter, wie sie nachstehend noch beschrieben wird, die an das Außengewinde des Stutzens angepaßt ist, zur Festlegung des Stutzens an der Wand dienen. Das gesamte Rohranschlußteil wird auf diese Weise sicher an der vorgesehenen Stelle gehaltert, und die im Inneren des Rohranschlußteils angeordneten Kabel oder Leitungen sind sicher gehalten und umfassend gegen äußere Einflüsse geschützt.

Um die Befestigung des Rohranschlußteils zu erleichtern, etwa durch eine auf den Stutzen aufgeschraubte Mutter, ist das Rohranschlußteil vorzugsweise an seinem Außenumfang zumindest teilweise mit einer nicht glatten Oberfläche versehen, vorzugsweise einer Riffelung. Dies erleichtert das Festhalten des Rohranschlußteils per Hand beim Anziehen der Mutter. Die Riffelung kann auch so ausgebildet sein, daß sie von einem entsprechend ausgebildeten Werkzeug umgriffen wird, wenn höhere Betätigungskräfte erforderlich werden. Hierzu ist vorteilhafterweise das Rohranschlußteil an seinem Außenumfang zum Ansetzen eines Werkzeuges ausgebildet, etwa zum Ansetzen eines Maulschlüssels sechskantförmig ausgebildet, die Oberfläche des betreffenden Abschnitts des Rohranschlußteils kann jedoch selbstverständlich auch zur Aufnahme anderer Werkzeuge passend ausgebildet sein, beispielsweise mit einer bogenförmigen Oberfläche und mit einer Ausnehmung zur Aufnahme eines Hakenschlüssels versehen sein.

Die Riffelung oder dergleichen oder die zum Ansetzen eines Werkzeuges ausgebildete Außenkontur des Rohranschlußteils kann im Prinzip an beliebiger Stelle des Rohranschlußteils vorgesehen werden. Vorteilhafterweise befindet sich dieser Bereich jedoch im Bereich des Anschlagteils, welches ohnehin einen relativ großen Durchmesser aufweist und daher besonders gut zur Einleitung der entsprechenden Kräfte geeignet ist.

Eine auch herstellungstechnisch besonders einfache Anordnung ergibt sich dann, wenn der Abschnitt zur Aufnahme des Wellrohrs, das Anschlagteil und der Stutzen in Axialrichtung des Rohranschlußteils hintereinanderliegend angeordnet sind. Bei einer bevorzugten Ausgestaltung der Erfindung sind zwei Abschnitte zur Aufnahme von jeweils einem Wellrohrende (oder zur Aufnahme eines durchgehenden Wellrohrs) vorgesehen. Mit einer derartigen Ausgestaltung lassen sich Abzweigstücke realisieren, die vorzugsweise T-förmig ausgebildet sind, wobei daher die beiden Abschnitte zur Aufnahme von Wellrohren miteinander fluchten und sich die Längsachse des Stutzens quer zu dieser Richtung erstreckt, oder beispielsweise ein Y-förmiges Abzweigstück, wobei die beiden Abschnitte zur Aufnahme von Wellrohren so angeordnet sind, daß ihre Längsachsen einen Winkel von vorzugsweise etwa 60 bis 90° zueinander aufspannen, und der Stutzen etwa zur Winkelhalbierenden dieses Winkels ausgerichtet ist.

Wenn der Abschnitt bzw. die Abschnitte zur Aufnahme des Wellrohres bzw. der Wellrohre einerseits und der Stutzen andererseits etwa den gleichen freien Innendurchmesser aufweisen, so läßt sich ein bestimmter Kabelquerschnitt durch sämtliche Teile des Rohranschlußteils hindurchführen. Allerdings gibt es Anwendungsfälle, wo dieser volle Querschnitt nicht bei sämtlichen Teilen des Rohranschlußteils erforderlich ist, und um dann aus Gründen der Raumersparnis (Verringerung der Außenabmessungen) insbesondere bei beschränkten Raumverhältnissen eine optimale Anpassung zu erzielen, kann der Abschnitt bzw. können die Abschnitte zur Aufnahme des Wellrohrs bzw. der Wellrohre einerseits und der Stutzen andererseits einen unterschiedlichen freien Innendurchmesser aufweisen. Das Rohranschlußteil dient daher im letztgenannten Fall gleichzeitig zumindest teilweise als Reduzierstück.

Für die meisten üblichen Einsatzfälle sind die Rastteile zur Verrastung der Halbteile dazu ausgebildet, daß sie nach erfolgter Verrastung wieder gelöst werden können, entweder per Hand oder mit einem einfachen Werkzeug. Hierdurch wird eine nachträgliche Verlegung zusätzlicher Kabel oder Leitungen erleichtert. Allerdings gibt es auch Anwendungsfälle, bei denen zwar die ursprüngliche Verlegung von Kabeln oder Leitungen durch Verwendung von geschlitzten Wellrohren und der erfindungsgemäßen Rohranschlußteile wesentlich erleichtert werden soll, danach jedoch die einmal erfolgte Verlegung zumindest für Unbefugte oder Laien nicht mehr zugänglich sein soll, so daß diese nicht an die Leitungen oder Kabel gelangen können. Zu diesem Zweck werden vorteilhafterweise die Rastmittel zur Verrastung der Halbteile so ausgebildet, daß sie eine endgültige Verrastung zur Verfügung stellen, die nicht ohne Zerstörung des Rohranschlußteils wieder zu lösen ist. Eine Zwischenstufe zwischen diesen beiden Arten der Ausgestaltung der Rastmittel bestände darin, die Rastmittel so auszugestalten, daß diese nur mit einem besonders kompliziert oder schwierig nachzuahmenden Werkzeug zu öffnen sind; im letztgenannten Fall kann erreicht werden, daß nur durch besonders befugte Personen, die im Besitze eines derartigen Werkzeuges sind, die Verrastung wieder gelöst und ein Zugang zu den von dem Rohranschlußteil umschlossenen Leitungen oder Kabeln ermöglicht wird.

Während die erfindungsgemäßen Rohranschlußteile zwar das Wellrohr sicher umschließen, kann in axialer Richtung am Ende des Wellrohrs bzw. des Rohranschlußteils immer noch Feuchtigkeit, Schmutz und dergleichen in das Innere eindringen und so die ordnungsgemäße Funktion der dort verlegten Kabel oder Leitungen beeinträchtigen. Um derartigen Beeinträchtigungen zu begegnen weist vorteilhafterweise der Innenraum des Abschnitts zur Aufnahme des Wellrohrs eine Einrichtung zum Haltern einer Dichtmembran auf. Damit diese auf bereits verlegte Kabel oder Leitungen aufgeschoben werden kann, ist sie vorteilhafterweise auf diese aufschnappbar ausgebildet. In entsprechender Weise wird vorzugsweise der Innenraum des Stutzens mit einer Einrichtung zum Haltern einer entsprechenden Dichtmembran versehen. In beiden Fällen ist die Dichtmembran vorteilhafterweise im wesentlichen kreisringförmig ausgebildet, und die Einrichtung zum Haltern der Dichtmembran ist eine kreisringförmige Ausnehmung im Innenraum des Abschnitts zur Aufnahme des Wellrohrs bzw. des Stutzens. Hierdurch wird die Membran einfach und sicher gehaltert und kann einfach in den betreffenden Teil des Rohranschlußteils eingeschoben und eingeschnappt werden.

Wie bereits eingangs erwähnt ist beispielsweise aus der US-PS 3 711 633 ein als T-Stück ausgebildetes Rohranschluß- oder Rohrverbindungsteil bekannt, welches auf ein durchlaufendes Wellrohr aufgeschnappt wird und das Anschließen eines weiteren, seitlich abzweigenden Wellrohrs ermöglicht. Allerdings können mit dem bekannten T-Stück nur Anschlüsse zu Wellrohren gleicher Nennweite hergestellt werden. Zur Erzielung einer weitmöglichen Flexibilität eines Schutzrohrsystems aus Wellrohren mit zugehörigen Rohranschlußteilen oder Rohrverbindungsteilen wird gemäß der vorliegenden Erfindung ein Rohrverbindungsteil mit den im Patentanspruch 17 angegebenen Merkmalen vorgeschlagen. Dadurch, daß die Innendurchmesser der Innenräume des ersten Abschnitts zur Aufnahme des ersten Wellrohrs und des zweiten Abschnitts zur Aufnahme des zweiten Wellrohrs von einander verschieden sind, läßt sich auf einfache Weise ein sogenanntes Reduzierstück ausbilden.

Um ein insgesamt auch bezüglich der Befestigungsteile flexibles Schutzrohrsystem zur Verfügung zu stellen wird gemäß der vorliegenden Erfindung weiterhin eine teilbare Mutter aus Kunststoff für Rohranschlußteile mit den im Patentanspruch 20 angegebenen Merkmalen vorgeschlagen. Hierbei ist zumindest ein Abschnitt der Mutter mit einer Außenkontur versehen, und es ist eine Überwurfmutter vorgesehen, die eine an die Außenkontur der Mutter angepaßte Innenkontur aufweist, wobei die Überwurfmutter als mit einer Unterbrechungsstelle versehener Ring ausgebildet ist. Die Überwurfmutter wird, nachdem die eigentliche teilbare Mutter zusammengeschnappt oder zusammengerastet wurde, mit ihrer Innenkontur auf die Außenkontur der Mutter aufgeschnappt; hierdurch ergibt sich ein besonders sicherer und fester Zusammenhalt der beiden Halbteile der teilbaren Mutter. Vorzugsweise ist die Überwurfmutter einstückig mit der Mutter ausgebildet, wodurch sowohl die Herstellung erleichtert und verbilligt als auch insbesondere die Montage erleichtert wird, da keine verlierbaren Teile existieren. Vorzugsweise ist hierzu die Überwurfmutter über ein einfach auftrennbares Verbindungsstück mit der Mutter verbunden.

Um ein präzises Verrasten der beiden Halbteile zu ermöglichen, können gemäß Anspruch 16 an einem Stutzenteil ein Rastloch und anderen Stutzenteil ein Raststift vorgesehen sein, so daß in der zusammengeklappten Position der Raststift in das Rastloch einfaßt.

Die Erfindung wird nachstehend anhand zeichnerisch dargestellter Ausführungsbeispiele näher erläutert, aus welchen weitere Vorteile und Merkmale hervorgehen.

Es zeigt:
- Fig. 1: eine Aufsicht auf ein Rohranschlußteil gemäß der Erfindung in aufgeklapptem Zustand;
- Fig. 2: eine teilweise Vorderansicht des in Fig. 1 gezeigten Rohranschlußteils;
- Fig. 3: eine Seitenansicht des Rohranschlußteils gemäß Fig. 1 und 2;
- Fig. 4: einen Schnitt entlang einer Linie A-B von Fig. 1;
- Fig. 5: eine Aufsicht auf ein weiteres Ausführungsbeispiel eines Rohranschlußteils gemäß der vorliegenden Erfindung in aufgeklapptem Zustand;
- Fig. 6: eine Aufsicht auf ein weiteres Ausführungsbeispiel eines als T-Stück ausgebildeten Rohranschlußteils gemäß der vorliegenden Erfindung;
- Fig. 7: eine Aufsicht auf ein weiteres, als Reduzierstück ausgebildetes Rohranschlußteil gemäß der vorliegenden Erfindung in aufgeklapptem Zustand;
- Fig. 8: eine Aufsicht auf eine teilbare Mutter gemäß der vorliegenden Erfindung mit zugehöriger Überwurfmutter;
- Fig. 9: eine teilweise Vorderansicht der in Figur 8 dargestellten teilbaren Mutter; und
- Fig. 10: eine Seitenansicht der in den Figuren 8 und 9 dargestellten teilbaren Mutter.

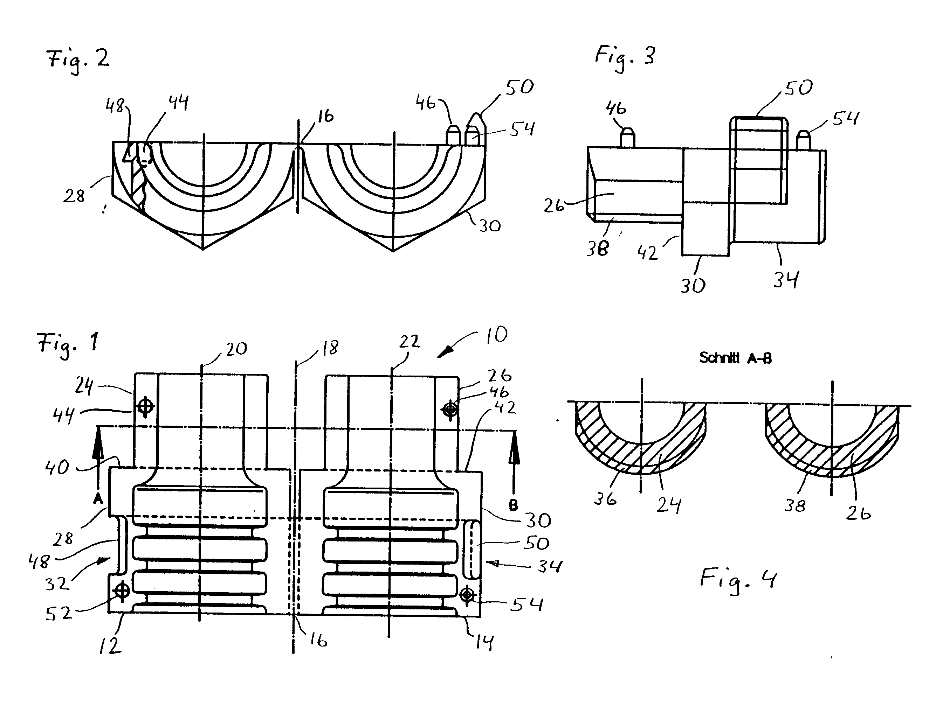

In Figur 1 ist ein Rohranschlußteil gemäß der vorliegenden Erfindung insgesamt mit der Bezugsziffer 10 bezeichnet und weist ein erstes Halbteil 12 und ein zweites Halbteil 14 auf, die über ein Filmscharnier 16 miteinander verbunden sind. Das (linke) Halbteil 12 weist eine zentrale Längsachse 20 auf, und das (rechte) Halbteil 14 eine zentrale Längsachse 22. Im zusammengeklappten Zustand des Rohranschlußteils 10, wenn also die beiden Halbteile 12, 14 aufeinanderliegen, kommen die beiden Längsachsen 20, 22 zur Deckung.

Die beiden Halbteile 12, 14 sind weitgehend - abgesehen von den noch zu beschreibenden Rastmitteln - symmetrisch aufgebaut. Ein Stutzen 24, 26 besteht aus zwei Stutzenteilen 24 bzw. 26. Hieran schließen sich entsprechend ein Teil 28 eines Anschlagteils bzw. ein Teil 30 des anderen Anschlagteils an. Mit den Bezugsziffern 40, 42 sind die zugehörigen Anschlagflächen des Anschlagteils 28, 30 bezeichnet, welche zur Anlage an eine ein Loch umgebende Wandung beispielsweise eines Gehäuses dienen.

Wie besonders aus dem in Figur 4 dargestellten Schnitt A-B hervorgeht, weist der Stutzen 24, 26 ein Außengewinde 36, 38 auf.

Mit der Bezugsziffer 32 ist ein Teil eines Abschnitts zur Aufnahme eines Wellrohrs bezeichnet, und entsprechend mit der Bezugsziffer 34 der zweite Teil des Abschnitts zur Aufnahme eines Wellrohrs.

In dem linken Halbteil 12 sind zwei Rastlöcher 44, 52 sowie eine Rastausnehmung 48 vorgesehen und - hierzu korrespondierend - in dem rechten Halbteil 14 zwei Raststifte 46, 54 bzw. eine Rastnase 50. Im zusammengerasteten Zustand des Rohranschlußteils 10 ist der Raststift 46 in das Rastloch 44 eingerastet, der Raststift 54 in das Rastloch 52, und die Rastnase 50 mit der Rastausnehmung 48 verrastet.

Besonders deutlich wird die gegenseitige Anordnung und Funktion der Rastmittel aus einem Vergleich der Figuren 1-3.

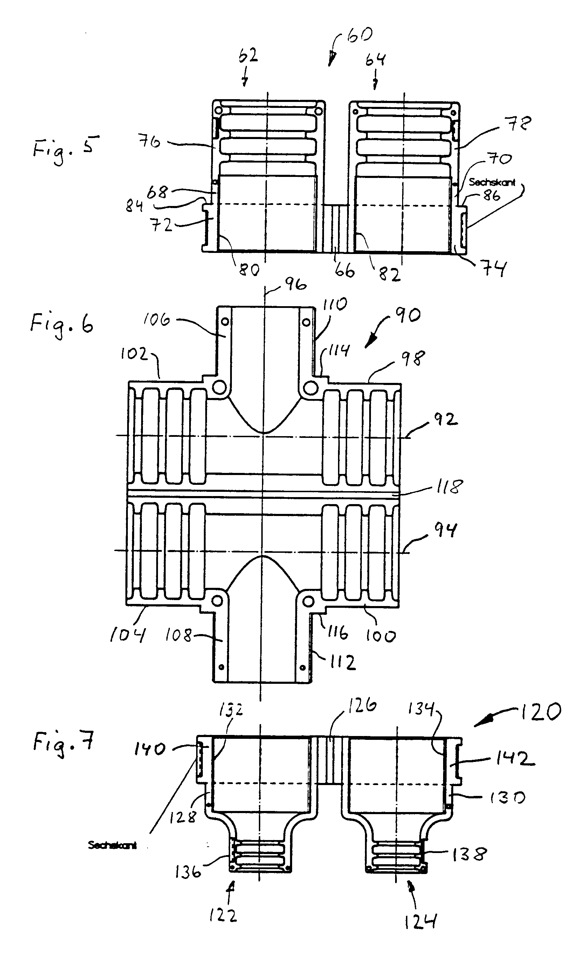

In Figur 5 ist eine weitere Ausführungsform eines insgesamt mit der Bezugsziffer 60 bezeichneten Rohranschlußteils gemäß der vorliegenden Erfindung dargestellt. Ein (linkes) Halbteil 62 und ein (rechtes) Halbteil 64 sind über ein Filmscharnier 66 miteinander verbunden. Bei dieser Ausführungsform schließt sich an den zur Aufnahme eines Wellrohrs ausgebildeten Abschnitt 76, 78 ein aus zwei Stutzenteilen 68, 70 bestehender Stutzen an, mit welchem einstückig ein Anschlagteil 72, 74 ausgebildet ist. Der Stutzenteil 68, 70 ist mit einem Innengewinde 80, 82 versehen.

Die Anschlagfläche des Anschlagteils 72, 74 ist mit den Bezugsziffern 84, 86 bezeichnet. Der Außenumfang des Anschlagteils 72, 74 ist als Sechskant ausgebildet, um hieran einen Maulschlüssel entsprechender Weite ansetzen zu können.

In Figur 6 ist ein weiteres Ausführungsbeispiel eines Rohranschlußteils, welches insgesamt mit der Bezugsziffer 90 bezeichnet ist, gemäß der vorliegenden Erfindung dargestellt. Das Rohranschlußteil 90 ist als sogenanntes T-Stück ausgebildet. Im zusammengerasteten oder zusammengeschnappten Zustand des T-Stücks 90 fallen die beiden Längsachsen 92, 94 von Abschnitten zur Aufnahme von Wellrohren zusammen, und quer hierzu in einem Winkel von 90° erstreckt sich eine Querachse 96, die Längsachse eines mit einem Außengewinde versehenen Stutzens.

Der eine Abschnitt zur Aufnahme eines Wellrohrs ist mit den Bezugsziffern 98, 100 bezeichnet und der andere Abschnitt zur Aufnahme eines Wellrohrs mit den Bezugsziffern 102, 104. Selbstverständlich ist es aber auch möglich, ein durchgehendes Wellrohr zwischen den Abschnitten 98, 102 einerseits und 100, 104 andererseits aufzunehmen.

Der Stutzen bei dieser Ausführungsform besteht aus Stutzenteilen 104, 108, die mit einem Außengewinde 110, 112 versehen sind. Das Anschlagteil bei dieser Ausführungsform ist durch die Anschlagflächen 114, 116 angedeutet.

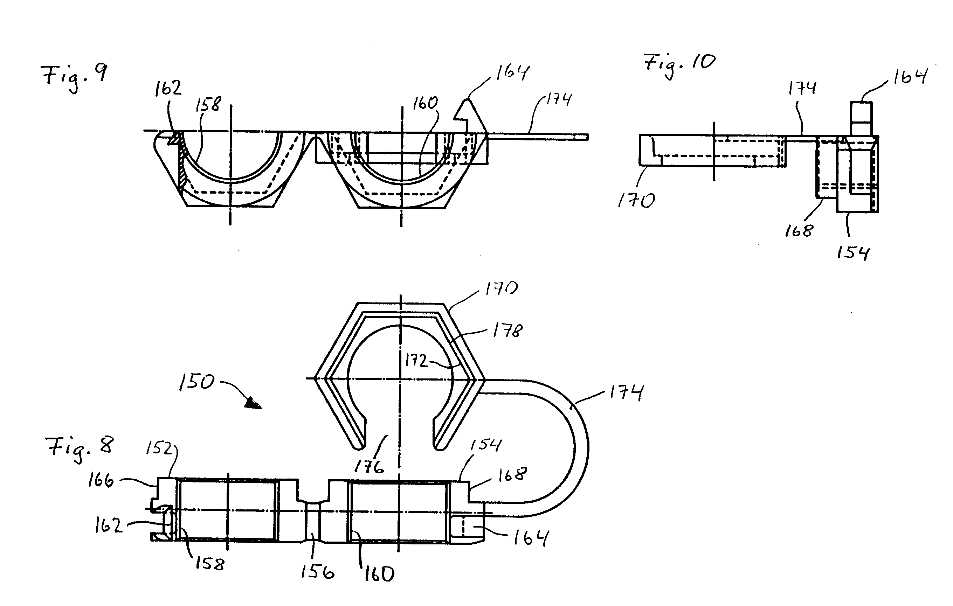

Bei den voranstehend beschriebenen Ausführungsformen ist der freie Innendurchmesser des Abschnitts zur Aufnahme des Wellrohres bzw. sind die Abschnitte zur Aufnahme der Wellrohre sowie der freie Innenraum des Stutzens mit im wesentlichen dem gleichen Durchmesser versehen. Bei der in Figur 7 dargestellten Ausführungsform eines Rohranschlußteils gemäß der vorliegenden Erfindung unterscheiden sich dagegen die entsprechenden Innendurchmesser, so daß ein sogenanntes Reduzierstück ausgebildet wird.

Das in Figur 7 dargestellte Reduzierstück 120 weist ein (linkes) Halbteil 122 und ein (rechtes) Halbteil 124 auf, die einstückig miteinander über ein Filmscharnier 126 verbunden sind. Mit den Bezugsziffern 128, 130 ist ein Stutzenteil bezeichnet, das ein Innengewinde 132, 134 aufweist. Im Endabschnitt des Stutzenteils 128, 130 ist ein Anschlagteil 140, 142 ausgebildet, dessen Außenkontur als Sechskant ausgeformt ist, um dort einen Maulschlüssel ansetzen zu können.

Der Stutzenteil 128, 130 geht, sich allmählich verjüngend, in einen Abschnitt 136, 138 zur Aufnahme eines Wellrohrs über. Im Vergleich zum freien Innendurchmesser des Stutzenteils 128, 130 ist der freie Innendurchmesser des Abschnitts 136, 138 zur Aufnahme eines Wellrohrs im Durchmesser verringert; das Reduzierstück 120 dient daher zum Anschluß eines gegenüber den übrigen Rohranschlußteilen im Durchmesser verringerten Wellrohres.

Die Gegenüberstellung der Figuren 5 bis 7 macht die baukastenartige Systemvielfalt der Rohranschlußteile gemäß der vorliegenden Erfindung deutlich. So kann etwa das in Figur 5 dargestellte Rohranschlußteil 60 auf den Stutzen 106, 108 des in Figur 6 gezeigten T-Stückes 90 aufgeschraubt werden, wenn der freie Innendurchmesser gleich bleiben soll. Soll sich dagegen der freie Innendurchmesser verringern, damit nicht so viel Platz beansprucht wird, und weil etwa aus dem Stutzen 106, 108 nur ein Teil der entlang den Achsen 94, 92 führenden Kabeln oder Leitungen abgezweigt werden soll, so wird auf den Stutzen 106, 108 das in Figur 7 dargestellte Reduzierstück 120 aufgeschraubt.

Selbstverständlich ist es beispielsweise ebenso möglich, das in Figur 7 dargestellte Reduzierstück dahingehend abzuändern, daß der freie Innendurchmesser des Abschnitts zur Aufnahme eines Wellrohres größer ist als der freie Innendurchmesser des Stutzens.

In den Figuren 8-10 ist eine insgesamt mit der Bezugsziffer 150 bezeichnete teilbare Mutter aus Kunststoff gemäß der vorliegenden Erfindung dargestellt. Die teilbare Mutter 150 weist zwei Halbteile 152, 154, die über ein Filmscharnier 156 miteinander verbunden sind, auf. Jedes der Halbteile 152, 154 weist ein Innengewinde 158 bzw. 160 auf.

Am (in Figur 8 linken) Halbteil 152 ist eine Rastausnehmung 162 vorgesehen, und am (rechten) Halbteil 154 eine entsprechende, zu der Rastausnehmung 162 korrespondierend ausgebildete Rastnase 164. Wenn die beiden Halbteile 152, 154 zur Ausbildung der geschlossenen Mutter 150 zusammengeschoben werden, erfolgt durch die gegenseitige Verrastung der Rastnase 164 mit der Rastausnehmung 162 die gegenseitige Verrastung der Halbteile 152 und 154.

Eine gewisse Schwachstelle bildet hierbei allerdings das relativ dünne Filmscharnier 156. Dieses muß ja so flexibel ausgebildet sein, daß die beiden Halbteile 152, 154 der Mutter 150 zur Anlage aneinanderkommen. Besonders bei höheren Betätigungskräften, also bei einem kräftigen Anziehen der Mutter 150, wird das Filmscharnier 156 stark beansprucht, und dies kann bei allzugroßer Beanspruchung dazu führen, daß sich das Filmscharnier 156 dehnt, wodurch kein sicherer Sitz der Mutter 150 etwa auf dem Außengewinde eines Stutzens eines Rohranschlußteils mehr gewährleistet ist, oder sogar reißt, wodurch die Mutter 150 unbrauchbar werden würde. Zur Überwindung dieser Schwierigkeiten dient gemäß der vorliegenden Erfindung eine Überwurfmutter 170.

Die beiden Halbteile 152, 154 weisen jeweils einen etwas verjüngten Abschnitt auf, welcher mit einer bestimmten Außenkontur 166 bzw. 168 versehen ist. Beispielsweise kann die Außenkontur 166 des Halbteils 152 drei Seiten eines Sechsecks umfassen, und die andere Außenkontur 168 des anderen Halbteils 154 ebenfalls drei (weitere) Seiten eines Sechsecks, so daß der verjüngte Abschnitt im geschlossenen Zustand der Mutter 150 die Außenkontur 166, 168 eines Sechecks hat. Hieran angepaßt ist eine entsprechende Innenkontur 172 der Überwurfmutter 170. Allerdings ist diese Innenkontur nicht geschlossen, damit die Überwurfmutter 170 beispielsweise über bereits verlegte Leitungen übergeschoben werden kann, und daher ist die Überwurfmutter 170 als offener Ring ausgebildet, der eine Unterbrechungsstelle 176 aufweist.

Soll nun die teilbare Mutter 150 etwa auf das Außengewinde eines Stutzens eines erfindungsgemäßen Rohranschlußteils aufgeschraubt werden, so wird zunächst die überwurfmutter 170 aufgeschoben oder aufgeklipst. Die Überwurfmutter 170 dient daher als Unterlegscheibe zwischen einer Wand, aus der ein Stutzen durch ein Loch hervorragt, und der Mutter 150. Dann wird die Mutter 150 geschlossen und auf den Stutzen aufgeschraubt, bis sie lose zur Anlage an die Überwurfmutter 170 kommt. Die Innenkontur 172 der Überwurfmutter 170 ist mit einer Fase 178 versehen, so daß sich bei weiterem Festschrauben der Mutter 150 deren Außenkontur 166, 168 - auf die Fase 178 auflaufend - in die Innenkontur 172 der überwurfmutter 170 eindreht. Die Mutter 150 wird auf diese Weise durch die überwurfmutter 170 daran gehindert, daß sie sich (beispielsweise durch ein Längen des Filmscharniers 156) aufweitet.

Daher sind mit der erfindungsgemäßen Mutter 150 erheblich höhere Anzugsdrehmomente erzielbar als mit einer teilbaren Mutter, die keine Überwurfmutter 170 aufweist.

Ein Verbindungsstück 174 verbindet die Mutter 150 mit der Überwurfmutter 170. Auf diese Weise wird vermieden, daß die Überwurfmutter 170 verloren gehen kann, und ein Monteur wird durch das Vorhandensein der Überwurfmutter 170 auch immer darauf hingewiesen, daß diese Überwurfmutter 170 eingesetzt werden soll. Die Mutter 150, das Verbindungsstück 174, und die Überwurfmutter 170 können einstückig in einem Arbeitsgang hergestellt werden, was auch die Herstellung erleichtert und damit verbilligt. Vorzugsweise ist das Verbindungsstück 174 so ausgeführt, daß es - falls erforderlich - leicht auf- oder abgetrennt werden kann; hierzu können etwa dünnere Stellen am Verbindungsstück 174 in der Nähe des Halbteils 154 und/oder der Überwurfmutter 170 vorgesehen werden. Auf diese Weise läßt sich erreichen, daß - gegebenenfalls ohne ein Werkzeug benutzen zu müssen - das Verbindungsstück 174 ab- oder aufgetrennt werden kann, wenn es im verlegten Zustand der Mutter 150 stören sollte.

## Patentansprüche

1. Rohranschlußteil (10) aus Kunststoff für Wellrohre,
a1) das zwei Teile aufweist,
a2) die in Axialrichtung aufklappbar sind und
a3) die mit Rastmitteln zur gegenseitigen Verrastung der zwei Teile versehen sind,
b1) das zumindest einen zur Aufnahme eines Wellrohres angepaßten Abschnitt (32, 34) aufweist,
b2) dessen Innenraum korrespondierend zum Außenumfang des Wellrohres ausgebildet ist,
c1) das zumindest einen Stutzen (24, 26) aufweist,
c2) der mit einem Gewinde versehen ist, und
d1) bei dem zumindest ein Anschlagteil (28, 30) vorgesehen ist,
d2) dessen Außendurchmesser größer ist als der Außendurchmesser des Stutzens,
**gekennzeichnet** durch die folgenden Merkmale:
e1) die zwei aufklappbaren Teile sind über ein Filmscharnier (16) verbunden,
e2) die zwei Teile sind die Halbteile des Rohranschlußteils (10),
f1) das Rohranschlußteil (10) ist einstückig ausgebildet, und
g1) das Gewinde, mit dem der Stutzen (24, 26) versehen ist, ist ein Außengewinde.

2. Rohranschlußteil nach Anspruch 1, dadurch **gekennzeichnet**, daß das Rohranschlußteil (10) an seinem Außenumfang eine nicht-glatte Oberfläche aufweist, vorzugsweise eine Riffelung.

3. Rohranschlußteil nach Anspruch 1, dadurch **gekennzeichnet**, daß das Rohranschlußteil (10) an seinem Außenumfang zum Ansetzen eines Werkzeuges ausgebildet ist.

4. Rohranschlußteil nach Anspruch 3, dadurch **gekennzeichnet**, daß das Rohranschlußteil (10) an seinem Außenumfang zum Ansetzen eines Maulschlüssels sechskantförmig ausgebildet ist.

5. Rohranschlußteil nach einem der Ansprüche 1 bis 4, dadurch **gekennzeichnet**, daß der Abschnitt (32, 34) zur Aufnahme des Wellrohrs, das Anschlagteil (28, 30) und der Stutzen (24, 26) in Axialrichtung (20, 22) des Rohranschlußteils (10) hintereinanderliegend angeordnet sind.

6. Rohranschlußteil nach einem der Ansprüche 1 bis 4, dadurch **gekennzeichnet**, daß zwei Abschnitte (98, 100; 102, 104) zur Aufnahme von jeweils einem Wellrohr vorgesehen sind.

7. Rohranschlußteil nach Anspruch 6, dadurch **gekennzeichnet**, daß die beiden Abschnitte (98, 100; 102, 104) miteinander fluchtend angeordnet sind, und daß die Längsachse (96) des Stutzens (106, 108) quer zu dieser Richtung verläuft, so daß das Rohranschlußteil (90) T-förmig ausgebildet ist.

8. Rohranschlußteil nach Anspruch 6, dadurch **gekennzeichnet**, daß die beiden Abschnitte so angeordnet sind, daß ihre Längsachsen einen Winkel von vorzugsweise etwa 60° bis etwa 90° zueinander aufspannen, und daß der Stutzen etwa zur Winkelhalbierenden ausgerichtet ist, so daß das Rohranschlußteil Y-förmig ausgebildet ist.

9. Rohranschlußteil nach einem der Ansprüche 1 bis 8, dadurch **gekennzeichnet**, daß der Abschnitt (32, 34; 76, 78) bzw. die Abschnitte (98, 100; 102, 104) zur Aufnahme des Wellrohrs bzw. der Wellrohre einerseits und der Stutzen (24, 26; 68, 70; 106, 108) andererseits etwa den gleichen freien Innendurchmesser aufweisen.

10. Rohranschlußteil nach einem der Ansprüche 1 bis 8, dadurch **gekennzeichnet**, daß der Abschnitt (136, 138) bzw. die Abschnitte zur Aufnahme des Wellrohrs bzw. der Wellrohre einerseits und der Stutzen (128, 130) andererseits einen unterschiedlichen freien Innendurchmesser aufweisen.

11. Rohranschlußteil nach einem der Ansprüche 1 bis 10, dadurch **gekennzeichnet**, daß die Rastmittel zur Verrastung der Halbteile zum Lösen der Verrastung nach erfolgter Verrastung ausgebildet sind.

12. Rohranschlußteil nach einem der Ansprüche 1 bis 10, dadurch **gekennzeichnet**, daß die Rastmittel zur Verrastung der Halbteile zu deren endgültiger Verrastung ausgebildet sind.

13. Rohranschlußteil nach einem der Ansprüche 1 bis 12, dadurch **gekennzeichnet**, daß der Innenraum des Abschnitts zur Aufnahme des Wellrohrs eine Einrichtung zum Haltern einer Dichtmembran aufweist.

14. Rohranschlußteil nach einem der Ansprüche 1 bis 13, dadurch **gekennzeichnet**, daß der Innenraum des Stutzens eine Einrichtung zum Haltern einer Dichtmembran aufweist.

15. Rohranschlußteil nach Anspruch 13 oder 14, dadurch **gekennzeichnet**, daß die Dichtmembran im wesentlichen kreisringförmig ausgebildet ist, und daß die Einrichtung zum Haltern eine kreisringförmige Ausnehmung ist.

16. Rohranschlußteil nach einem oder mehreren der vorhergegangenen Ansprüche, dadurch **gekennzeichnet**, daß an mindestens einem Teil (24, 26, 32, 34) ein Rastloch (44) und an dem anderen Teil (24, 26, 32, 34) ein Raststift (46) angeordnet ist, der in der zusammengeklappten Position in das Rastloch (44) einfaßt.

17. Rohrverbindungsteil aus Kunststoff für Wellrohre,
a1) das zwei Teile aufweist,
a2) die in Axialrichtung aufklappbar sind und
a3) die mit Rastmitteln zur gegenseitigen Verrastung der zwei Teile versehen sind,
b1) das zumindest einen zur Aufnahme eines Wellrohres angepaßten Abschnitt aufweist,
b2) dessen Innenraum korrespondierend zum Außenumfang des Wellrohres ausgebildet ist,
c1) wobei das Rohrverbindungsteil zumindest einen zweiten, zur Aufnahme eines zweiten Wellrohres angepaßten Abschnitt aufweist,
**gekennzeichnet** durch die folgenden Merkmale:
d1) die zwei aufklappbaren Teile sind über ein Flimscharnier (16) verbunden,
d2) die zwei Teile sind die Halbteile des Rohranschlußteils (10),
e1) das Rohranschlußteil (10) ist einstückig ausgebildet,
f1) die Innendurchmesser der Innenräume des ersten Abschnitts zur Aufnahme des ersten Wellrohres und des zweiten Abschnitts zur Aufnahme des zweiten Wellrohres sind voneinander verschieden.

18. Teilbare Mutter aus Kunststoff für Rohranschlußteile,
a1) die in Axialrichtung aufklappbar ist,
a2) zwei über ein Filmscharnier (156) verbundene Halbteile (152, 154) aufweist,
a3) die mit Rastmitteln (162, 164) zur gegenseitigen Verrastung der Halbteile versehen sind, und
b1) die ein Innengewinde (158, 160) aufweist,
b2) das an den Außenumfang des Rohranschlußteils angepaßt ist,
**gekennzeichnet** durch die folgenden Merkmale:
c) zumindest ein Abschnitt der Mutter ist mit einer Außenkontur (166, 168) versehen,
d1) es ist eine Überwurfmutter (170) vorgesehen,
d2) die eine an die Außenkontur der Mutter (150) angepaßte Innenkontur (172) aufweist,
e) die Überwurfmutter (170) ist als mit einer Unterbrechungsstelle (176) versehener Ring ausgebildet.

19. Mutter nach Anspruch 18, dadurch **gekennzeichnet**, daß die Überwurfmutter (170) einstückig mit der Mutter (150) ausgebildet ist.

20. Mutter nach einem der Ansprüche 18 oder 19, dadurch **gekennzeichnet**, daß die Überwurfmutter (170) über ein vorzugsweise einfach auftrennbares Verbindungsstück (174) mit der Mutter (150) verbunden ist.

## Claims

1. Pipe-union part (10) made of plastic for corrugated pipes,
a1) which has two parts
a2) which can be swung open in the axial direction and
a3) which are provided with locking means for the interlocking of the two parts,
b1) which has at least one portion (32, 34) which is adapted to receive a corrugated pipe and
b2) the interior of which is designed to match the outer circumference of the corrugated pipe,
c1) which has at least one connection piece (24, 26)
c2) which is provided with a thread, and
d1) in which there is provided at least one stop part (28, 30),
d2) the outside diameter of which is larger than the outside diameter of the connection piece,
characterized by the following features:
e1) the two swing-open parts are joined via a film hinge (16),
e2) the two parts are the half-parts of the pipe-union part (10),
f1) the pipe-union part (10) is made in one piece, and
g1) the thread with which the connection piece (24, 26) is provided is an external thread.

2. Pipe-union part according to Claim 1, characterized in that the pipe-union part (10) has a non-smooth surface, preferably a grooving, on its outer circumference.

3. Pipe-union part according to Claim 1, characterized in that the pipe-union part (10) is designed on its outer circumference for the application of a tool.

4. Pipe-union part according to Claim 3, characterized in that the pipe-union part (10) is designed hexagonally on its outer circumference for the application of an open-jawed spanner.

5. Pipe-union part according to one of Claims 1 to 4, characterized in that the portion (32, 34) for receiving the corrugated pipe, the stop part (28, 30) and the connection piece (24, 26) are arranged in succession in the axial direction (20, 22) of the pipe-union part (10).

6. Pipe-union part according to one of Claims 1 to 4, characterized in that two portions (98, 100; 102, 104), each for receiving a corrugated pipe, are provided.

7. Pipe-union part according to Claim 6, characterized in that the two portions (98, 100; 102, 104) are arranged in line with one another, and in that the longitudinal axis (96) of the connection piece (106, 108) extends transversely relative to this direction, so that the pipe-union part (90) is of T-shaped design.

8. Pipe-union part according to Claim 6, characterized in that the two portions are arranged in such a way that their longitudinal axes form an angle of preferably approximately 60° to approximately 90° to one another, and in that the connection piece is aligned approximately with the angle-bisecting line, so that the pipe-union part is of Y-shape design.

9. Pipe-union part according to one of Claims 1 to 8, characterized in that the portion (32, 34; 76, 78) or the portions (98, 100; 102, 104) for receiving the corrugated pipe or corrugated pipes, on the one hand, and the connection piece (24, 26; 68, 70; 106, 108), on the other hand, have approximately the same free inside diameter.

10. Pipe-union part according to one of Claims 1 to 8, characterized in that the portion (136, 138) or the portions for receiving the corrugated pipe or the corrugated pipes, on the one hand, and the connection piece (128, 130), on the other hand, have a different free inside diameter.

11. Pipe-union part according to one of Claims 1 to 10, characterized in that the locking means for locking the half-parts are designed to release the interlock after locking has taken place.

12. Pipe-union part according to one of Claims 1 to 10, characterized in that the locking means for locking the half-parts are designed for their definitive interlocking.

13. Pipe-union part according to one of Claims 1 to 12, characterized in that the interior of the portion for receiving the corrugated pipe has a device for the retention of a sealing diaphragm.

14. Pipe-union part according to one of Claims 1 to 13, characterized in that the interior of the connection piece has a device for the retention of a sealing diaphragm.

15. Pipe-union part according to Claim 13 or 14, characterized in that the sealing diaphragm is designed essentially annularly, and in that the retention device is an annular recess.

16. Pipe-union part according to one or more of the preceding claims, characterized in that there are arranged on at least one part (24, 26, 32, 34) a locking hole (44) and on the other part (24, 26, 32, 34) a locking pin (46) which , in the swung-together position, engages into the locking hole (44).

17. Pipe-junction part made of plastic for corrugated pipes,
a1) which has two parts
a2) which can be swung open in the axial direction and
a3) which are provided with locking means for the interlocking of the two parts,
b1) which has at least one portion which is adapted to receive a corrugated pipe and
b2) the interior of which is designed to match the outer circumference of the corrugated pipe,
c1) the pipe-junction part having at least one second portion adapted to receive a second corrugated pipe,
characterized by the following features:
d1) the two swing-open parts are joined via a film hinge (16),
d2) the two parts are the half-parts of the pipe-union part (10),
e1) the pipe-union part (10) is made in one piece,
f1) the inside diameters of the interiors of the first portion for receiving the first corrugated pipe and of the second portion for receiving the second corrugated pipe are different from one another.

18. Divisible nut made of plastic for pipe-union parts,
a1) which can be swung open in the axial direction,
a2) has two half-parts (152, 154) which are joined via a film hinge (156) and
a3) which are provided with locking means (162, 164) for the interlocking of the half-parts, and
b1) has an internal thread (158, 160)
b2) which is matched to the outer circumference of the pipe-union part,
characterized by the following features:
c) at least one portion of the nut is provided with an outer contour (166, 168),
d1) there is provided a spigot nut (170)
d2) which has an inner contour (172) matched to the outer contour of the nut (150),
e) the spigot nut (170) is designed as a ring provided with an interruption point (176).

19. Nut according to Claim 18, characterized in that the spigot nut (170) is made in one piece with the nut (150).

20. Nut according to one of Claims 18 or 19, characterized in that the spigot nut (170) is connected to the nut (150) via a junction piece (174) which can preferably be severed in a simple way.

## Revendications

1. Pièce de raccord de tuyaux (10) en plastique pour tuyaux ondulés,
a1) qui présente deux parties,
a2) qui peuvent être dépliées en direction axiale et
a3) sont pourvues de moyens d'arrêt en vue de l'enclenchement réciproque des deux parties,
b1) qui présente au moins une section (32, 34) destinée à loger un tuyau ondulé,
b2) dont l'espace interne est conçu de manière à correspondre au périmètre externe du tuyau ondulé,
c1) qui présente au moins un manchon (24, 26),
c2) qui est pourvu d'un filet, et
d1) au moins une pièce de butée (28, 30) étant prévue,
d2) dont le diamètre externe est supérieur au diamètre externe du manchon,
caractérisée par les particularités suivantes:
e1) les deux parties dépliables sont reliées par l'intermédiaire d'une charnière en film (16),
e2) les deux parties sont les moitiés de la pièce de raccord de tuyaux (10),
f1) la pièce de raccord de tuyaux (10) est conçue en une seule pièce, et
g1) le filet dont est pourvu le manchon (24, 26) est un filet extérieur.

2. Pièce de raccord de tuyaux selon la revendication 1 caractérisée en ce que la pièce de raccord de tuyaux (10) présente sur sa périphérie externe une surface non lisse, de préférence des nervures.

3. Pièce de raccord de tuyaux selon la revendication 1 caractérisée en ce que la pièce de raccord de tuyaux (10) est conçue sur sa périphérie externe en vue de l'application d'un outil.

4. Pièce de raccord de tuyaux selon la revendication 3 caractérisée en ce que la pièce de raccord de tuyaux (10) est conçue sur sa périphérie externe en forme hexagonale en vue de l'application d'une clé à fourche.

5. Pièce de raccord de tuyaux selon l'une des revendications 1 à 4 caractérisée en ce que la section (32, 34) destinée à loger le tuyau ondulé, la pièce de butée (28, 30) et le manchon (24, 26) sont disposés successivement en direction axiale (20, 22) de la pièce de raccord de tuyaux (10).

6. Pièce de raccord de tuyaux selon l'une des revendications 1 à 4 caractérisée en ce que deux sections (98, 100; 102, 104) sont destinées à loger respectivement un tuyau ondulé.

7. Pièce de raccord de tuyaux selon la revendication 6 caractérisée en ce que les deux sections (98, 100, 102, 104) sont alignées réciproquement et en ce que l'axe longitudinal (96) du manchon (106, 108) s'étend perpendiculairement à cette direction de sorte que la pièce de raccord de tuyaux (90) soit conçue en forme de T.

8. Pièce de raccord de tuyaux selon la revendication 6 caractérisée en ce que les deux sections sont disposées de sorte que leurs axes longitudinaux forment de préférence un angle d'environ 60° à environ 90° et que le manchon soit orienté approximativement vers la bissectrice, la pièce de raccord de tuyaux étant en forme de Y.

9. Pièce de raccord de tuyaux selon l'une des revendications 1 à 8 caractérisée en ce que la section (32, 34; 76, 78) ou les sections (98, 100; 102, 104) destinées à loger le ou les tuyaux ondulés, d'une part, et le manchon (24, 26; 68, 70; 106, 108) d'autre part, présentent approximativement le même diamètre interne libre.

10. Pièce de raccord de tuyaux selon l'une des revendications 1 à 8 caractérisée en ce que la section (136, 138) ou les sections destinées à loger le ou les tuyaux ondulés, d'une part, et le manchon (128, 130), d'autre part, présentent un diamètre interne libre différent.

11. Pièce de raccord de tuyaux selon l'une des revendications 1 à 10, caractérisée en ce que les moyens d'arrêt en vue de l'enclenchement des moitiés sont conçus en vue de leur détachement après leur enclenchement.

12. Pièce de raccord de tuyaux selon l'une des revendications 1 à 10, caractérisée en ce que les moyens d'arrêt en vue de l'enclenchement des moitiés sont conçues pour leur enclenchement définitif.

13. Pièce de raccord de tuyaux selon l'une des revendications 1 à 12, caractérisée en ce que l'espace interne de la section destinée à loger le tuyau ondulé présente un dispositif de retenue d'une membrane d'étanchéité.

14. Pièce de raccord de tuyaux selon l'une des revendications 1 à 13, caractérisée en ce que l'espace interne du manchon présente un dispositif de retenue d'une membrane d'étanchéité.

15. Pièce de raccord de tuyaux selon la revendication 13 ou 14, caractérisée en ce que la membrane d'étanchéité présente une forme essentiellement circulaire et que le dispositif de retenue est une cavité circulaire.

16. Pièce de raccord de tuyaux selon l'une ou plusieurs des revendications précédentes, caractérisée en ce qu'au moins un orifice à encoche (44) est disposé sur au moins une partie (24, 26, 32, 34) et une broche d'arrêt (46) est disposée sur l'autre partie (24, 26, 32, 34) laquelle s'insère dans l'orifice à encoche (44) en position repliée.

17. Pièce de jonction de tuyaux en plastique pour tuyaux ondulés
a1) qui présente deux parties,
a2) qui peuvent être dépliées en direction axiale et
a3) qui sont pourvues de moyens d'arrêt pour l'enclenchement réciproque des deux parties;
b1) qui présente au moins une section destinée à loger un tuyau ondulé,
b2) dont l'espace interne est conçu de manière à correspondre à la périphérie externe du tuyau ondulé,
c1) la pièce de jonction de tuyaux présentant au moins une deuxième section destinée à loger un deuxième tuyau ondulé,
caractérisée par les particularités suivantes:
d1) les deux parties dépliables sont reliées par l'intermédiaire d'une charnière en film (16),
d2) les deux parties sont les moitiés de la pièce de raccord de tuyaux (10),
e1) la pièce de raccord de tuyaux (10) est conçue en une seule pièce, et
f1) le diamètre interne des espaces internes de la première section destinée à recevoir le premier tuyau ondulé et de la deuxième section destinée à recevoir le deuxième tuyau ondulé sont différents.

18. Ecrou divisible en plastique pour des pièces de raccord de tuyaux
a1) qui peut être déplié en direction axiale,
a2) qui présente deux moitiés (152, 154) reliées par l'intermédiaire d'une charnière en film (156),
a3) qui sont pourvues de moyens d'arrêt (162, 164) en vue de l'enclenchement réciproque des moitiés, et
b1) qui présente un filet interne (158, 160),
b2) qui est adapté à la périphérie externe de la pièce de raccord de tuyaux,
caractérisé par les particularités suivantes:
c) au moins une section de l'écrou est pourvue d'un contour externe (166, 168),
d1) un écrou de serrage (170) est prévu,
d2) il présente un contour interne (172) adapté au contour externe de l'écrou (150),
e) l'écrou de serrage (170) est conçu comme une bague présentant une zone d'interruption (176).

19. Ecrou selon la revendication 18, caractérisé en ce que l'écrou de serrage (170) est conçu en une seule pièce avec l'écrou (150).

20. Ecrou selon l'une des revendications 18 ou 19, caractérisé en ce que l'écrou de serrage (170) est fixé à l'écrou (150) par l'intermédiaire d'une pièce de jonction (174) détachable de préférence simplement.
